# EUROPÄISCHE PATENTSCHRIFT

(11) **EP 3 130 490 B1**
(45) Veröffentlichungstag und Bekanntmachung des Hinweises auf die Patenterteilung: **29.07.2020**
(21) Anmeldenummer: 16182615.1
(22) Anmeldetag: 03.08.2016
(51) Int. Cl.: B60G 7/00, B62D 17/00

(54) **AKTIVER RADTRÄGER FÜR EIN KRAFTFAHRZEUG**
ACTIVE WHEEL CARRIER FOR A MOTOR VEHICLE
SUPPORT DE ROUE ACTIF POUR UN VÉHICULE AUTOMOBILE

(30) Priorität: 10.08.2015 LU 92797
(43) Veröffentlichungstag der Anmeldung: 15.02.2017
(73) Patentinhaber: Ovalo GmbH, 65555 Limburg (DE)
(72) Erfinder:
(74) Vertreter: Grabovac, Dalibor

(56) Entgegenhaltungen:
- EP-A1- 1 634 732
- WO-A1-98/16418
- WO-A1-2008/061619
- WO-A2-2011/020534
- DE-A1-102004 049 296
- DE-A1-102008 048 568
- DE-A1-102013 211 430
- DE-A1-102014 112 689
- US-A1- 2006 017 251

## Beschreibung

Die Erfindung betrifft einen aktiven Radträger beinhaltend eine Einstellvorrichtung mit einer von einem Stellantrieb angetriebenen Einstellwelle zum Einstellen von Spur und/oder Sturz.

Ein derartiger Radträger ist beispielsweise aus DE 10 2004 049 296 A1 bekannt. Konkret offenbart diese Druckschrift eine in einem Radträger gelagerte Nabeneinheit für ein Rad eines zweispurigen Fahrzeugs mit einem um die Radachse drehbar gelagerten Radflansch, die unter Zwischenschaltung eines kreiszylindrischen Verstellringes, dessen Zylinderachse zur Achse des Rades schräg gestellt ist, gegenüber dem Radträger um diese Zylinderachse drehbar im Radträger gelagert ist. Der Verstellring ist in einem Komplementärring gelagert, der den Verstellring umgibt und diesem geometrisch derart angepasst ist, dass der Verstellring um seine Zylinderachse gegenüber dem Komplementärring drehbar ist und dass der Komplementärring um eine so genannte Neutralachse, die in einer Grundposition des Verstellringes mit der Radachse zusammenfällt, drehbar letztlich im Radträger gelagert ist. Über eine Verdrehung dieser Ringe sind Sturz und/oder Spur des Rades einstellbar, und zwar über eine Verstelleinheit zum Verdrehen des Verstellringes und/oder des Komplementärringes. Zusätzlich können der Verstellring und/oder der Komplementärring derart gelagert sein, dass mit einer einen negativen Radsturz erzeugenden oder vergrößernden Verdrehung des Verstellringes eine Verlagerung des Radflansches nach außen - annähernd in Richtung der Radachse - erfolgt.

Auch aus WO 98/16418, die den Oberbegriff des Anspruchs 1 offenbart, ist eine Vorrichtung zur Winkeleinstellung für Fahrzeugräder bekannt. Die Vorrichtung umfasst eine erste Lagereinheit, die um eine erste Achse drehbar gelagert ist und die eine zweite Lagereinheit trägt. Die erste Lagereinheit und die zweite Lagereinheit stehen in einer zur ersten Achse schief angeordneten Ebene miteinander in Kontakt.

DE 10 2008 048 568 A1 offenbart eine Lenkvorrichtung mit zwei Drehteilen, die zum Lenken bei gleichzeitiger Sturz- und/oder Spuroptimierung verdreht werden können. Die Lenkvorrichtung ist derart aufgebaut, dass das Stellglied ein Fahrzeugrad um einen Lenkwinkel schwenkt, der über ein Lenkwinkelgeber vorgebbar ist. Das Stellglied weist ein radseitiges Drehteil und ein achsseitiges Drehteil auf, die um ihre Drehachsen zueinander verdrehbar sind, wobei zur Erstellung des Lenkwinkels des Fahrzeugrades das radseitige Drehteil beim Verdrehen gegenüber dem achsseitigen Drehteil auslenkbar ist.

Aus WO 2011/020534 A2 ist eine Vorrichtung zum Verstellen von Sturz und/oder Spur eines Fahrzeugrads eines Kraftfahrzeugs bekannt. Die Vorrichtung beinhaltet einen Radträger, der ein radseitiges Trägerteil und ein achsseitiges Führungsteil aufweist, zwischen denen zueinander verdrehbare Drehteile geschaltet sind, wobei zur Einstellung von Spur und/oder Sturz zumindest eines der Drehteile über einen Antrieb und eine Getriebestufe in beiden Drehrichtungen verstellbar ist. Die Getriebestufe für das Drehteil ist als ein Harmonic-Drive-Getriebe mit einer antreibenden, elliptischen Antriebsscheibe, einer auf der Antriebsscheibe flexibel gelagerten Zahnradhülse und einem feststehenden, innenverzahnten Hohlrad ausgeführt.

Es ist die Aufgabe der vorliegenden Erfindung, einen aktiven Radträger anzugeben, der langlebig ein präzises und zuverlässiges Einstellen von Spur und/oder Sturz ermöglicht.

Die Aufgabe wird durch einen Radträger der eingangs genannten Art gelöst, der dadurch gekennzeichnet ist, dass der Stellantrieb ein torsionssteifes und gleichzeitig biegeweiches Abtriebselement aufweist, über das er an die Einstellwelle angeschlossen ist und das die übrigen Teile des Stellantriebs von fremdangetriebenen axialen und/oder radialen Bewegungen der Einstellwelle wenigstens teilweise, insbesondere vollständig, entkoppelt.

In erfindungsgemäßer Weise wurde zunächst erkannt, dass der Stellantrieb eines aktiven Radträgers nicht allein das Drehmoment zum Einstellen der Einstellwelle aufbringen muss, sondern darüber hinaus Kräfte und Drehmomente von dem an dem Radträger befestigten Rad über die Einstellwelle auf den Stellantrieb übertragen werden, die den Stellantrieb belasten. Diese Kräfte und Drehmomente, die insbesondere beim Fahren auf unebenem Untergrund, bei Kurvenfahrten oder beim Bremsen auftreten, belasten den Stellantrieb und insbesondere dessen Lager, wodurch die Lebensdauer und die Einstellgenauigkeit leiden. In erfindungsgemäßer Weise werden, abgesehen von dem Abtriebselement, die übrigen Teile des Stellantriebs von diesen fremdangetriebenen axialen und/oder radialen Bewegungen der Einstellwelle mechanisch entkoppelt. Auf diese Weise werden diese Teile geschont, so dass sie über einen längeren Zeitraum präzise funktionieren können.

Erfindungsgemäß weist der Stellantrieb einen Antriebsmotor und ein dem Antriebsmotor nachgeschaltetes Getriebe auf. Insbesondere kann vorteilhaft vorgesehen sein, dass der Antriebsmotor und das Getriebe in einem gemeinsamen Gehäuse angeordnet sind. Besonders robust ist eine Ausführung, bei der das Abtriebselement und die Einstellwelle gemeinsam einstückig hergestellt sind.

Bei einer besonders kompakten Ausführung sind der Antriebsmotor und das Getriebe zueinander koaxial angeordnet. Es kann alternativ auch vorgesehen sein, dass der Antriebsmotor und das Getriebe zueinander achsparallel angeordnet sind. Eine solche Ausführung erlaubt es, den Stellantrieb besonders gut verwinkelten Bauraumverhältnissen anzupassen. Insbesondere bei einer achsparallelen Ausführung können der Antriebsmotor und das Getriebe vorteilhaft über ein Zugmittelgetriebe wirkverbunden sein.

Alternativ ist es auch möglich, dass der Antriebsmotor und das Getriebe zueinander im Winkel angeordnet. Hierbei können beispielsweise verzahnte Kegelräder verwendet werden, um den Antriebsmotor und das Getriebe triebtechnisch zu koppeln. Die Kegelräder können beispielsweise einen Kegelwinkel von 45 Grad aufweisen, um den Antriebsmotor und das Getriebe im Winkel von 90 Grad zueinander anordnen zu können.

Erfindungsgemäß ist das Getriebe als Koaxialgetriebe mit einem auf der Symmetrieachse des Koaxialgetriebes angeordneten Antriebselement und mit einem koaxial angeordneten Umlaufelement ausgebildet, wobei das Abtriebselement, das Umlaufelement und eine mit dem Umlaufelement drehfest verbundene topfförmige Abtriebsglocke aufweist. Im Sinne der vorliegen Anmeldung wird unter einem Umlaufelement insbesondere auch ein Bauteil verstanden, dass koaxial zu den übrigen Getriebebauteilen angeordnet ist und um eine die koaxiale Mittelachse rotiert, ohne seine Position zu verändern. Bei einer solchen Ausführung läuft bei der Rotation jeder Bestandteil des Umlaufelements um koaxiale Mittelachse herum.

Insbesondere kann vorteilhaft vorgesehen sein, das Abtriebselement und/oder die Abtriebsglocke, torsionssteif ausgebildet ist, um ein präzises Einstellen von Spur und/oder Sturz zu ermöglichen. Das Abtriebselement, insbesondere die Abtriebsglocke, kann insbesondere in Bezug auf Drehmomente, deren Drehmomentvektor axial ausgerichtet ist, torsionssteif ausgebildet sein.

Um eine Entkopplung der übrigen Teile des Stellantriebes zu erreichen, kann das Abtriebselement, insbesondere die Abtriebsglocke, in Bezug auf Kräfte, die in Axialrichtung und/oder in Radialrichtung wirken, elastisch ausgebildet sein. Insbesondere kann vorteilhaft vorgesehen sein, dass das Abtriebselement und/oder die Abtriebsglocke, biegeweich ausgebildet sind und/oder dass das Abtriebselement und/oder die Abtriebsglocke in Axialrichtung und/oder in Radialrichtung elastisch ausgebildet ist.

Durch das biegeweiche und torsionssteife Abtriebselement, das beispielsweise eine vorzugsweise biegeweiche und torsionssteife, topfförmige Abtriebsglocke beinhalten kann, insbesondere in Kombination mit einer ortsfesten Lagerung des Umlaufelementes, beispielsweise bei einem als Spannungswellengetriebe ausgeführten Getriebe der Flexspline, sowie der Wellengenerator und/oder ein Dynamicspline und/oder eine Hohlradlagerung wirkungsvoll von den radialen und/oder axialen Bewegungen, insbesondere Taumelbewegungen, die die Einstellwelle ausführt, zumindest weitgehend, entkoppelt werden, ohne dass die spielfreie Übertragbarkeit eines Drehmomentes von dem Getriebe auf die Einstellwelle nachteilig beeinflusst wird. Die Hohlradlagerung muss daher allenfalls einen kleinen Restanteil der radialen und/oder axialen Bewegungen, insbesondere Taumelbewegungen, aufnehmen.

Insbesondere kann vorteilhaft vorgesehen sein, dass die Umlaufelementlagerung als Gleitlager oder als Wälzlager ausgebildet ist, und/oder dass die Umlaufelementlagerung das Umlaufelement in radialer und/oder axialer Richtung relativ zu einem Gehäuse des Getriebes oder des Stellantriebes abstützt. Alternativ oder zusätzlich ist es auch möglich, dass die Umlaufelementlagerung das Umlaufelement radial umgibt, und/oder dass die Umlaufelementlagerung das Umlaufelement koaxial an seinem Außenumfang umgebendes Gleitlager oder Wälzlager aufweist. Bei einer besonderen Ausführung weist die Umlaufelementlagerung mehrere, das Umlaufelement an seinem Außenumfang umgebende Stützstellen auf. Zum Verhindern axialer Bewegungen des Umlaufelements kann vorteilhaft vorgesehen sein, dass die Umlaufelementlagerung an dem Umlaufelement anliegt.

Bei einer besonderen Ausführung des Getriebes als Spannungswellengetriebe erfolgt eine ortsfeste Lagerung des Umlaufelementes, insbesondere eines Circularsplines oder eines Dynamicsplines, über die Lagerung des Wellengenerators und über den Flexspline, so dass die Lager dieser Bauteile gleichzeitig die Umlaufelementlagerung bilden. Bei einer solchen Ausführung ist das Abtriebselement vorzugsweise besonders biegeweich ausgebildet, um eine Überlastung der übrigen Bauteile des Getriebes zu vermeiden.

Das Abtriebselement ist vorzugsweise derart elastisch ausgebildet und die Umlaufelementlagerung derart dimensioniert, dass radiale Bewegungen der Einstellwelle im Bereich von 0 bis 1/4000 des Durchmessers des Umlaufelementes, insbesondere im Bereich von 0 bis 1/2000 des Durchmessers des Umlaufelementes, insbesondere im Bereich von 0 bis 1/1000 des Durchmessers des Umlaufelementes, insbesondere im Bereich von 0 bis 1/100 des Durchmessers des Umlaufelementes, auftreten können, ohne dass diese Bewegungen der angekoppelten Einstellwelle zu einer Bewegung des Umlaufelementes führen und ohne dass das Abtriebselement beschädigt wird.

Alternativ oder zusätzlich ist das Abtriebselement vorzugsweise derart elastisch ausgebildet und die Umlaufelementlagerung derart dimensioniert, dass axiale Bewegungen der Einstellwelle im Bereich von 0 bis 1/4000 des Durchmessers des Umlaufelementes, insbesondere im Bereich von 0 bis 1/2000 des Durchmessers des Umlaufelementes, insbesondere im Bereich von 0 bis 1/1000 des Durchmessers des Umlaufelementes, insbesondere im Bereich von 0 bis 1/100 des Durchmessers des Umlaufelementes, auftreten können, ohne dass diese Bewegungen der angekoppelten Welle zu einer Bewegung des Umlaufelementes führen und ohne dass das Abtriebselement beschädigt wird.

Vorzugsweise ist das Abtriebselement in Bezug auf Kräfte, die in Tangentialrichtung wirken, starr ausgebildet, um eine Torsionssteifheit für die verzögerungsfreie Übertragung von Drehmomenten an die Einstellwelle zu erreichen. Vorzugsweise weist das Abtriebselement eine Torsionssteifigkeit auf, die so groß ist, dass das Abtriebselement über seine axiale Länge um weniger als ein Radiant verdrillt wird, wenn ein Drehmoment von 10.000 Nm, insbesondere von 20.000 Nm, insbesondere von 50.000 Nm, insbesondere von 100.000 Nm an ihm anliegt.

Bei einer besonderen Ausführung des als Spannungswellengetriebe oder Planetengetriebe ausgebildeten Getriebes ist der radiale Abstand vom Fußkreis der Innenverzahnung des Hohlrades zum Außenumfang des Hohlrades mehr als vier Mal größer, insbesondere mehr als zehn Mal größer, insbesondere mehr als 25 mal größer, als die Wanddicke der Abtriebsglocke und/oder die Wanddicke der Abtriebsglocke in einem Biegebereich verringerter Wanddicke. Eine solche Ausführung bietet ein besonders gutes Verhältnis von Stabilität, Biegeweichheit und Torsionssteifigkeit. Alternativ oder zusätzlich kann die Wanddicke der Abtriebsglocke insbesondere 0,2 mm bis 1, 5 mm, insbesondere 0,3 mm bis 0,7 mm, insbesondere 0,4 bis 0,5 mm betragen. Eine solche Wanddicke ist weitgehend unabhängig vom Durchmesser des Hohlrades vorteilhaft.

Bei einer besonderen Ausführung liegt der Quotient aus der axialen Länge des Hohlrades und der axialen Länge der Abtriebsglocke im Bereich von 0,25 bis 1,2, insbesondere im Bereich von 0,5 bis 1,1. Alternativ oder zusätzlich kann vorteilhaft vorgesehen sein, dass der Quotient aus der axialen Länge des Hohlrades und der axialen Länge eines kreiszylinderförmiger Abschnitts der Abtriebsglocke im Bereich von 0,25 bis 1,2, insbesondere im Bereich von 0,5 bis 1,1 liegt. Derartige Ausführungen haben den Vorteil, dass das Hohlrad für die zu übertragenden Drehmomente ausreichend breit ist und dass eine für diese Drehmomente ausreichende Torsionssteifigkeit vorliegt. Dies insbesondere, wenn die Abtriebsglocke die oben beschriebenen Wanddicke aufweist.

Bei einer besonderen Ausführung ist das Spannungswellengetriebe als Ringgetriebe ausgebildet. Bei einer solchen Ausführung ist der elastische Flexspline nicht in Topfform, sondern in Ringform (Flexring) ausgeführt. Eine solche Bauweise ist vorteilhafter Weise insbesondere axial besonders kompakt. Darüber hinaus ist eine solche Ausführung des Spannungswellengetriebes besonders unempfindlich gegen radiale und/oder axiale Schwingungen, insbesondere Taumelbewegungen, der Einstellwelle. Dies im Gegensatz zu einer Bauweise in Topform deshalb, weil ein Flextopf nicht vorhanden ist, der aufgrund seiner Flexibilität und der ovalen Verformung empfindlich gegen radiale Belastungen, insbesondere radiale Dauerbelastungen, ist. Allerdings ist eine Ausbildung des Spannungswellengetriebes mit einem Flextopf grundsätzlich möglich.

Eine torsionssteife Ausbildung des Abtriebselements kann insbesondere dadurch realisiert sein, dass ein im Wesentlichen kreiszylinderförmiger Abschnitt der Abtriebsglocke einen möglichst großen Durchmesser, insbesondere einen Durchmesser der dem Durchmessers des Umlaufelementes entspricht oder im Bereich des 0,8 fachen bis 1,2 fachen dem Durchmessers des Umlaufelementes liegt, aufweist. Darüber hinaus kann vorteilhaft vorgesehen sein, dass sich an den kreiszylinderförmigen Abschnitt ein Bodenabschnitt, insbesondere in Form einer Kreisscheibe, anschließt, der in einer radialen Ebene angeordnet ist.

Wie ebenfalls bereits erwähnt, ist das Abtriebselement, insbesondere eine Abtriebsglocke des Abtriebselements, biegeweich ausgebildet, um die von der Einstellwelle ausgeführten Radialbewegungen und/oder Axialbewegungen, insbesondere Taumelbewegungen, ausgleichen zu können. Insbesondere kann das Abtriebselement in Bezug auf Kräfte, die in Axialrichtung und/oder in Radialrichtung wirken, elastisch ausgebildet sein. Um dies zu erreichen können der Bodenabschnitt und/oder der kreiszylinderförmige Abschnitt gewellt ausgebildet sein. Insbesondere kann das Abtriebselement, insbesondere die Abtriebsglocke, einen faltenbalgartig ausgebildeten Bereich aufweisen. Vorzugsweise sind die Wellen konzentrisch zum Umlaufelement und/oder einer Abtriebswelle angeordnet.

Bei einer ganz besonders vorteilhaften Ausführung, insbesondere bei einer Ausführung, die ein einstückig aus einem Rohmaterial hergestelltes Abtriebselement aufweist, ist zwischen die Einstellwelle und dem Abtriebselement keine weitere Vorrichtung zum Entkoppeln von radialen und/oder axialen, insbesondere Taumelbewegungen, der Verstellwelle geschaltet.

Von ganz besonderem Vorteil ist eine Ausführung, bei der das Abtriebselement, insbesondere die Abtriebsglocke des Abtriebselements, keine beweglichen Bauteile aufweist. Insbesondere kann vorteilhaft vorgesehen sein, dass das Abtriebselement, insbesondere gemeinsam mit der Einstellwelle, einstückig ausgebildet ist. Das Abtriebselement, insbesondere die Abtriebsglocke, kann, insbesondere auch zusammen mit dem Umlaufelement und/oder einer Abtriebswelle, aus einem einzigen Stück Rohmaterial, insbesondere in einem Zerspanungsverfahren, wie beispielsweise einem Drehverfahren, hergestellt sein. Eine Biegeweichheit bei gleichzeitiger Torsionssteifigkeit kann beispielsweise bei einer einstückig hergestellten Abtriebsglocke durch einen Biegeabschnitt, der eine geringere Wanddicke als die übrigen Abschnitte der Abtriebsglocke aufweist, realisiert sein.

Auch unabhängig davon, ob das Abtriebselement und/oder die Abtriebsglocke, bewegliche Bauteile aufweist oder nicht, kann zur Erzielung einer Biegeweichheit bei gleichzeitiger Torsionssteifigkeit wenigstens ein Biegeabschnitt mit einer verringerten Wanddicke vorhanden sein. Insbesondere kann der Biegeabschnitt vorteilhaft in einem Übergangsbereich von einem kreiszylinderförmigen Abschnitt zu einem Bodenabschnitt angeordnet sein.

Eine besonders wirkungsvolle Entkopplung kann ganz allgemein beispielsweise dadurch erreicht werden, dass das Abtriebselement und/oder die Abtriebsglocke wenigstens einen Biegeabschnitt mit einer verringerten Wanddicke aufweisen.

Bei einer besonderen Ausführung weisen das Abtriebselement und/oder die Abtriebsglocke einen kreiszylinderförmigen Abschnitt auf. Insbesondere kann die Abtriebsglocke einen sich in radialer Richtung erstreckenden Bodenabschnitt aufweisen. Hierbei vorteilhaft vorgesehen sein, dass der Bodenabschnitt, insbesondere in radialer und/oder radialer Richtung, elastisch ausgebildet ist und/oder dass der Bodenabschnitt und/oder der kreiszylinderförmige Abschnitt gewellt ist. Insbesondere können der kreiszylinderförmige Abschnitt und der Bodenabschnitt in einem Bereich mit einer verringerten Wanddicke ineinander übergehen.

Erfindungsgemäß weist das Abtriebselement eine drehfest mit der Abtriebsglocke verbundene Abtriebswelle auf, die vorzugsweise auf der Symmetrieachse des Koaxialgetriebes angeordnet ist. An die Abtriebswelle kann die Einstellwelle direkt oder indirekt angekoppelt sein. Es ist auch möglich, dass die Abtriebswelle einstückig in die Einstellwelle übergeht oder gleichzeitig die Einstellwelle ist.

Erfindungsgemäß sind das Umlaufelement und die Abtriebswelle an einander gegenüberliegenden Enden der Abtriebsglocke angeordnet.

Besonders robust ist, wie bereits erwähnt, eine Ausführung, bei der die Abtriebsglocke einstückig gemeinsam mit dem Umlaufelement hergestellt ist und/oder bei der das Abtriebselement, insbesondere die Abtriebsglocke einstückig gemeinsam mit der Abtriebswelle hergestellt ist. Beispielsweise können die Abtriebsglocke und insbesondere das gesamte Abtriebselement in einem Zerspanungsverfahren, wie beispielsweise einem Drehverfahren, aus einem einzigen Stück Rohmaterial hergestellt sein.

Das Abtriebselement kann ein Ankoppelelement, insbesondere einen Flansch, zum Ankoppeln der Einstellwelle aufweisen. Das Ankoppelelement kann insbesondere einen kleineren Durchmesser aufweisen, als das Umlaufelement.

Bei einer besonderen Ausführung sind das Abtriebselement und/oder die Abtriebsglocke als einerseits radialflexible und/oder quer zur Axialrichtung biegbare und andererseits torsionssteife Kupplung ausgebildet.

Wie bereits erwähnt, kann das Umlaufelement vorteilhaft, insbesondere ausschließlich, gleitgelagert angeordnet sein. Eine solche Ausführung ist besonders robust und solide. Insbesondere kann eine solche Ausführung derart ausgebildet sein, dass trotz der Biegeweichheit über den Getriebeabtrieb eingekoppelte, radiale und/oder axiale Bewegungen über die Gleitlagerung und weitere Bauteile des aktiven Radträgers direkt oder indirekt beispielsweise in ein Tragelement oder eine Radaufhängung oder eine Karosserie abgeleitet werden. Eine Gleitlagerung hat außerdem den ganz besonderen Vorteil, dass sie sehr robust ausgebildet werden kann und darüber hinaus kostengünstig herstellbar ist. Eine solche Ausführung des aktiven Radträgers hat außerdem den Vorteil, dass sie besonders langlebig ist und die eingangs geschilderten Auswirkungen der unerwünschten Kräfte und/oder Drehmomente, die letztlich zu einem frühzeitigen Verschleißen führen, wirkungsvoll vermieden werden können.

Wie bereits erwähnt, kann das Koaxialgetriebe vorteilhaft als Spannungswellengetriebe ausgebildet sein.

Ein Spannungswellengetriebe ist zumeist in der Weise aufgebaut, dass es ein starres, kreisförmiges und innenverzahntes Hohlrad, das als Circularspline bezeichnet wird, und ein radialflexibles außenverzahntes Zahnrad, das im Inneren des starren innenverzahnten Hohlrades angeordnet ist und als Flexspline bezeichnet wird, aufweist. In dem außenverzahnten Zahnrad ist ein zumeist elliptischer Wellengenerator mittels eines Wälzlagers drehbar angeordnet, der das radialflexible außenverzahnte Zahnrad zu einer elliptischen Form verformt, um die Verzahnungen des innenverzahnten Zahnrades und des radialflexiblen außenverzahnten Zahnrades an jedem Ende der Ellipsen-Hauptachse miteinander in Eingriff zu bringen. Außerdem kann ein weiteres innenverzahntes Hohlrad, nämlich ein Dynamicspline, der dieselbe Zähneanzahl aufweist wie der Flexspline, mit dem Flexspline in Wirkeingriff stehen.

Die Verwendung eines spielfreien Getriebes, insbesondere eines Spannungswellengetriebes, ist besonders vorteilhaft, weil sich die übertragenen, störenden Bewegungen der Einstellwelle umso weniger zu einem Ausschlagen führen, je geringer das Getriebespiel ist. Bei einem spielbehafteten Getriebe kann sich das bereits anfänglich vorhandene Spiel durch die oben erwähnten, unerwünschten Drehmomente und Kräfte zunehmend vergrößern. Dennoch ist die Verwendung eines spielbehafteten Getriebes aufgrund der oben geschilderten mechanischen Entkopplung durchaus möglich und vertretbar.

Bei einer besonderen, als Spannungswellengetriebe ausgeführten Ausführung des Koaxialgetriebes verbleibt der Flexspline, insbesondere relativ zu einem Gehäuse des Getriebes oder des Stellantriebes, stets in derselben Drehstellung. Insbesondere kann vorteilhaft vorgesehen sein, dass der Flexspline mittels eines gehäusefesten, innenverzahnten Dynamicspline, der dieselbe Zähnezahl aufweiset, wie der Flexspline, in seiner gehäusefesten Drehstellung gehalten wird. Alternativ kann auch vorgesehen sein, dass der Flexspline direkt an dem Gehäuse befestigt ist.

Wie bereits erwähnt, kann das Koaxialgetriebe als Spannungswellengetriebe ausgebildet sein, wobei insbesondere vorgesehen sein kann, dass das Umlaufelement ein Circularspline oder ein Dynamicspline ist, und/oder dass das Antriebselement ein Wellengenerator ist oder einen Wellengenerator aufweist. Es ist alternativ auch möglich, dass das Koaxialgetriebe ein Spannungswellengetriebe ist und das Umlaufelement ein Flexspline ist. Insbesondere kann das Koaxialgetriebe ein Spannungswellengetriebe sein, wobei das Antriebselement ein Wellengenerator ist oder einen Wellengenerator aufweist.

Alternativ kann beispielsweise auch vorgesehen sein, dass das Koaxialgetriebe ein Planetengetriebe ist. Hierbei kann insbesondere vorgesehen sein, dass das Umlaufelement ein Planetenradträger oder ein Hohlrad des Planetengetriebes ist und/oder dass das Antriebselement ein Sonnenrad ist oder ein Sonnenrad aufweist.

In besonders vorteilhafter Weise kann der aktive Radträger eine Sperreinrichtung und/oder eine Bremse zum Blockieren bzw. Abbremsen einer Rotationsbewegung eines Rotationsbauteils des Stellantriebes, insbesondere einer Welle des Getriebes und/oder die Abtriebswelle des Antriebsmotors und/oder der Einstellwelle, aufweisen, um zu verhindern, dass sich der Sturzwinkel und/oder der Spurwinkel bei abgestelltem Fahrzeug ungewollt verändert. Hierbei kann insbesondere vorteilhaft vorgesehen sein, dass die Sperreinrichtung und/oder die Bremse im elektrisch stromlosen Zustand automatisch geschlossen ist.

Die Sperreinrichtung kann beispielsweise - unabhängig von einer Stromversorgung - bistabil ausgebildet sein; nämlich derart, dass ein eingestellter Schaltzustand (Verriegelungsstellung oder Freigabestellung) von der Permanentmagnetanordnung zuverlässig solange erhalten wird, bis das Verriegelungsbauteil in den jeweils anderen Schaltzustand umgeschaltet wird.

Der aktive Radträger kann vorteilhaft mehrere, insbesondere genau zwei, der oben beschriebenen Stellantriebe aufweisen. Insbesondere kann vorteilhaft vorgesehen sein, dass der aktive Radträger ein um eine Einstellachse relativ zu einem achsseitigen Träger drehbares, achsseitiges Stellelement und ein relativ zu dem achsseitigen Stellelement drehbares radseitiges Stellelement aufweist. Hierbei kann insbesondere vorgesehen sein, dass die Stellelemente an Kontaktflächen in einer Kontaktebene miteinander in Kontakt stehen, die einen von 90 Grad verschiedenen Winkel zur Einstellachse aufweist. Der achsseitige Träger kann insbesondere dazu ausgebildet sein, Bauteile des Radträgers, insbesondere den Stellantrieb, zu halten und, insbesondere beweglich jedoch drehfest, in einer Radaufhängung oder einer Fahrzeugkarosserie befestigt zu werden.

Darüber hinaus kann vorteilhaft vorgesehen sein, dass der Stellantrieb dazu dient, das radseitige Stellelement drehend anzutreiben, während ein weiterer Stellantrieb dazu dient, das achsseitige Stellelement drehend anzutreiben. Bei einer solchen Ausführung lässt sich die Flächennormale der Radscheibe eines an das radseitige Stellelement über ein Radlager angekoppelten Rades innerhalb eines durch einen Kegelmantel begrenzten Raumes durch geeignete Ansteuerung der Stellantriebe der Stellelemente beliebig ausrichten. Der Öffnungswinkel des Kegelmantels und damit der Einstellbereich sind durch den Winkel der Kontaktebene relativ zur Einstellachse festgelegt. Der weitere Stellantrieb kann beispielsweise von einem radseitigen Träger gehalten sein, der zu dem achsseitigen Träger beweglich, jedoch drehfest angeordnet ist.

Die Einstellwelle kann direkt oder über ein Koppelgetriebe mit wenigstens einem Stellelement des aktiven Radträgers wirkverbunden sein. Das Abtriebselement und/oder die Einstellwelle kann vorteilhaft beispielsweise ein Zahnrad eines Koppelgetriebes tragen, das eine Wirkverbindung zu wenigstens einem Stellelement des aktiven Radträgers herstellt.

Der Stellantrieb kann vorteilhaft einen Drehstellungssensor aufweisen, mit dem die jeweils aktuelle Drehstellung des Abtriebselements und/oder die Einstellwelle ermittelt werden kann. In besonders vorteilhafter Weise kann der Drehstellungssensor in das Getriebe und/oder in den Antriebsmotor integriert sein. Alternativ oder zusätzlich kann auch vorgesehen sein, dass der Drehstellungssensor mit dem Getriebe und/oder dem Antriebsmotor in einem gemeinsamen Gehäuse angeordnet ist. Aus dem Messsignal des Drehstellungssensors kann auf die aktuelle Einstellung des Spurwinkels oder des Sturzwinkels geschlossen werden.

Insbesondere kann vorteilhaft vorgesehen sein, dass sowohl der Stellantrieb, als auch der weitere Stellantrieb jeweils einen Drehstellungssensor aufweisen. Aus den Meßsignalen der Drehstellungssensoren kann auf die aktuelle Einstellung des Spurwinkels und des Sturzwinkels geschlossen werden.

Der erfindungsgemäße Radträger kann auch zum Lenken verwendet werden. Hierbei wird jeweils der Spurwinkel zweier Räder einer Fahrzeugsachse gleichzeitig in dieselbe Richtung verändert.

Von besonderem Vorteil ist ein Fahrwerk für ein Kraftfahrzeug, das wenigstens einen erfindungsgemäßen aktiven Radträger aufweist. Ebenfalls besonders vorteilhaft ist ein Fahrzeug, das wenigstens einen erfindungsgemäßen aktiven Radträger aufweist.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel eines erfindungsgemäßen aktiven Radträgers in Nullstellung von Spur und Sturz,
- Fig. 2: das Ausführungsbeispiel bei einer anderen Einstellung,
- Fig. 3: ein erstes Ausführungsbeispiel eines Stellantriebes eines erfindungsgemäßen aktiven Radträgers,
- Fig. 4: ein zweites Ausführungsbeispiel eines Stellantriebes eines erfindungsgemäßen aktiven Radträgers,
- Fig. 5: ein drittes Ausführungsbeispiel eines Stellantriebes eines erfindungsgemäßen aktiven Radträgers,
- Fig. 6: ein viertes Ausführungsbeispiel eines Stellantriebes eines erfindungsgemäßen aktiven Radträgers,
- Fig. 7: ein Ausführungsbeispiel eines als Spannungswellengetriebe ausgeführten Getriebes eines Stellantriebes eines erfindungsgemäßen aktiven Radträgers,
- Fig. 8: ein Ausführungsbeispiel eines anderen als Spannungswellengetriebe ausgeführten Getriebes eines erfindungsgemäßen aktiven Radträgers, und

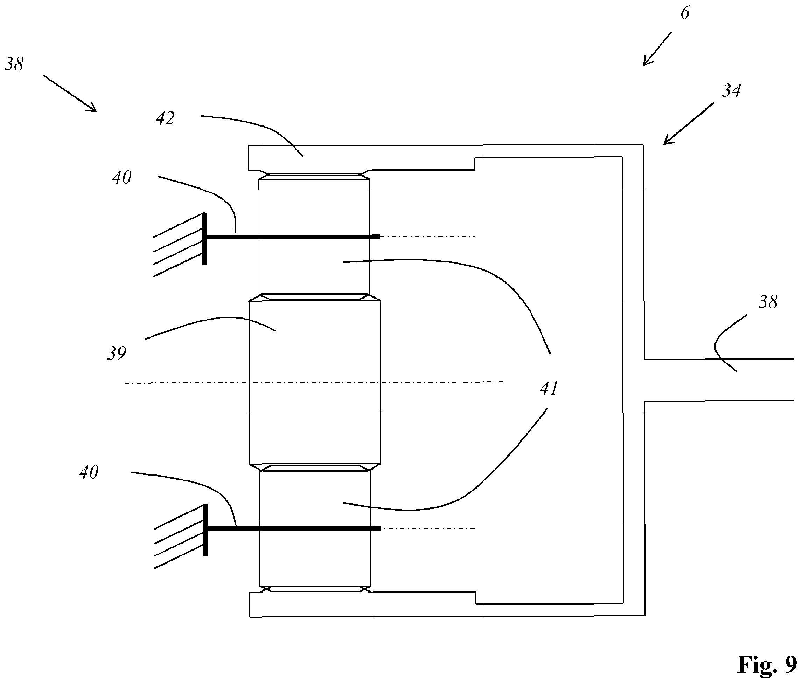

- Fig. 9: ein Ausführungsbeispiel eines als Planetengetriebe ausgeführten Getriebes eines Stellantriebes eines erfindungsgemäßen aktiven Radträgers.

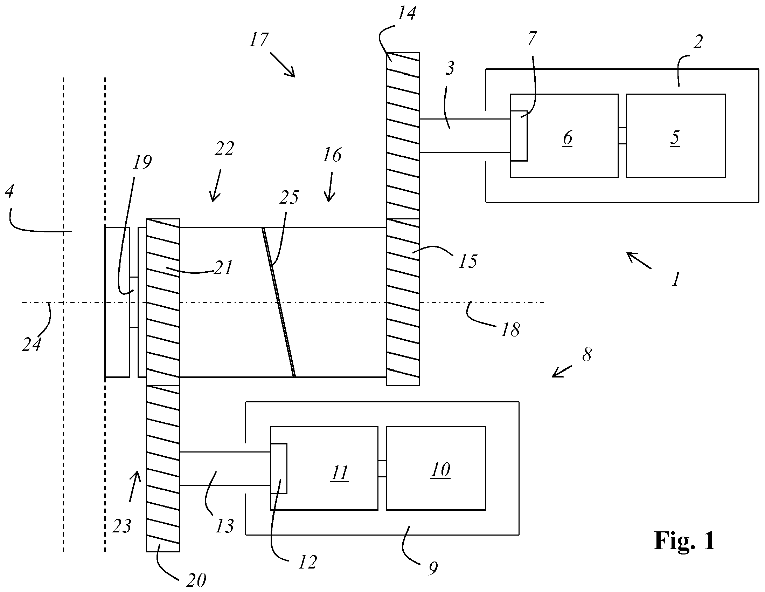

Fig. 1 zeigt ein Ausführungsbeispiel eines erfindungsgemäßen aktiven Radträgers. Der aktiver Radträger beinhaltet eine erste Einstellvorrichtung 1 mit einer von einem Stellantrieb 2 angetriebenen Einstellwelle 3 zum Einstellen von Spur und/oder Sturz eines über ein Radlager 19 an den aktiven Radträger angekoppelten Rades, von dem in der Figur lediglich schematisch ein Teil der Radscheibe 4 angedeutet ist.

Der Stellantrieb 2 weist einen Antriebsmotor 5 und ein dem Antriebsmotor 5 nachgeschaltetes Getriebe 6 auf. Außerdem weist der Stellantrieb 2 ein torsionssteifes und gleichzeitig biegeweiches Abtriebselement 7 auf, über das er an die Einstellwelle 3 angeschlossen ist und das die übrigen Teile des Stellantriebs 2 von fremdangetriebenen axialen und/oder radialen Bewegungen der Einstellwelle 3 wenigstens teilweise entkoppelt.

Die Einstellwelle 3 trägt ein Zahnrad 14, das mit einem Gegenzahnrad 15 eines achsseitigen Stellelements 16 kämmt. Das Zahnrad 14 und das Gegenzahnrad 15 bilden ein Koppelgetriebe 17, das eine Wirkverbindung zwischen dem Stellantrieb 2 und dem Stellelement 16 herstellt. Mit dem Stellantrieb 2 kann das Stellelement 16 relativ zu einem nicht dargestellten achsseitigen Träger um eine Einstellachse 18 gedreht werden.

Der aktive Radträger beinhaltet außerdem eine weitere Einstellvorrichtung 8 mit einem weiteren Stellantrieb 9. Der weitere Stellantrieb 9 weist einen weiteren Antriebsmotor 10 und ein dem weiteren Antriebsmotor 10 nachgeschaltetes, weiteres Getriebe 11 auf. Außerdem weist der weitere Stellantrieb 10 ein weiteres, torsionssteifes und gleichzeitig biegeweiches Abtriebselement 12 aufweist, über das er an eine weitere Einstellwelle 13 angeschlossen ist und das die übrigen Teile des weiteren Stellantriebs 9 von fremdangetriebenen axialen und/oder radialen Bewegungen der weiteren Einstellwelle 13 wenigstens teilweise entkoppelt.

Die weitere Einstellwelle 13 trägt ein weiteres Zahnrad 20, das mit einem weiteren Gegenzahnrad 21 eines radseitigen Stellelements 22 kämmt. Das weitere Zahnrad 20 und das weitere Gegenzahnrad 21 bilden ein weiteres Koppelgetriebe 23, das eine Wirkverbindung zwischen dem weiteren Stellantrieb 9 und dem Stellelement 16 herstellt. Mit dem weiteren Stellantrieb 9 kann das weitere Stellelement 22 relativ zu einem nicht dargestellten radseitigen Träger um eine weitere Einstellachse 24, die in der gezeigten Einstellung der Stellelemente zueinander koaxial zur Einstellachse 18 ausgerichtet ist, gedreht werden.

Das achsseitige Stellelement 16 und das radseitige Stellelement 22 stehen an Kontaktflächen in einer Kontaktebene 25 miteinander in Kontakt, die einen von 90 Grad verschiedenen Winkel zur Einstellachse 18 aufweist. Die Ausrichtung der Flächennormalen der Radscheibe 4 - und damit der Spurwinkel und der Sturzwinkel - lässt sich innerhalb eines von einem Kegelmantel begrenzten Raumes durch geeignete Ansteuerung der Stellantriebe 2, 9 beliebig einstellen. Der Öffnungswinkel des Kegelmantels und damit der Einstellbereich ist durch den Winkel der Kontaktebene 25 relativ zur Einstellachse 18 festgelegt.

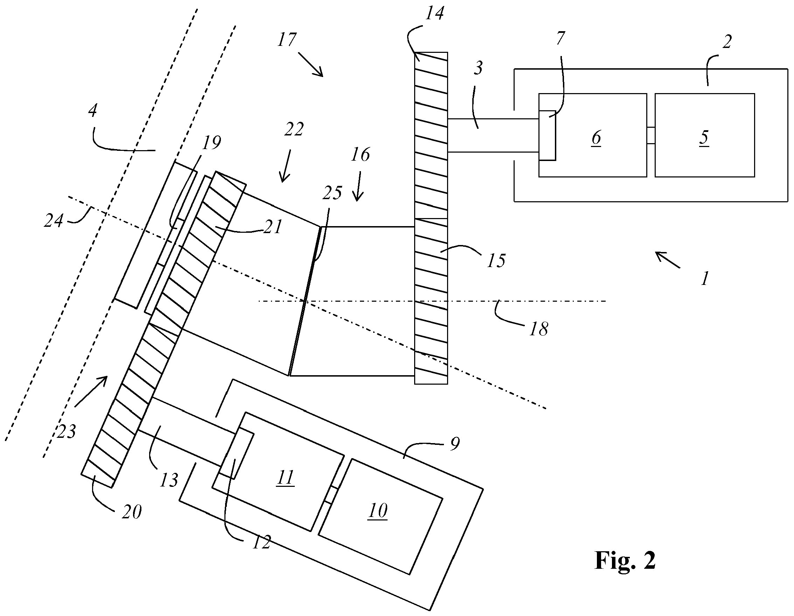

Fig. 2 zeigt das bereits in Fig. 1 dargestellte Ausführungsbeispiel bei einer anderen Einstellung der Drehstellung der Stellelemente 16, 22. In der gezeigten Drehstellung weisen die Einstellachsen 18, 23 einen von Null Grad verschiedenen Winkel zueinander auf.

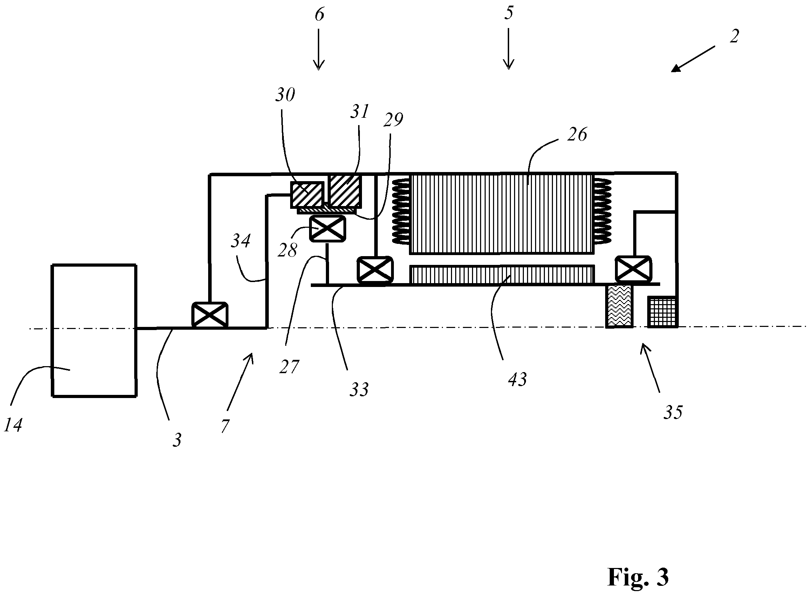

Fig. 3 zeigt ein erstes Ausführungsbeispiel eines Stellantriebes 2 eines erfindungsgemäßen aktiven Radträgers. Der Stellantrieb 2 weist einen Antriebsmotor 5 auf, der u.a. einen Rotor 43 und einen Stator 26 beinhaltet. Der Stellantrieb 2 weist außerdem ein dem Antriebsmotor 5 nachgeschaltetes Getriebe 6 auf, das als ein Koaxialgetriebe, nämlich konkret als Spannungswellengetriebe, ausgebildet ist.

Das Spannungswellengetriebe beinhaltet ein über eine Antriebswelle 33 mit dem Rotor 25 drehfest verkoppeltes Antriebselement, nämlich einen Wellengenerator 27, der mittels eines Wälzlagers 28 rotierbar innerhalb eines außenverzahnten Flexsplines 29 angeordnet ist und der den Flexspline 29 zu einer elliptischen Form verbiegt, um dessen Außenverzahnung mit der Innenverzahnung eines Circularspline 30 und eines Dynamicspline 31 an jedem Ende der Ellipsen-Hauptachse in Eingriff zu bringen. Der Dynamicspline 31 ist relativ zu einem Gehäuse 32 des Stellantriebes 2 drehfest angeordnet.

Der Circularspline 30 bildet ein Umlaufelement, das mit einer topfförmigen Abtriebsglocke 34 drehfest verbunden ist. Die Abtriebsglocke 34 ist sowohl torsionssteif (insbesondere in Bezug auf Drehmomente, deren Drehmomentvektor axial ausgerichtet ist), als auch biegeweich (insbesondere in Bezug auf Kräfte, die in Axialrichtung und/oder in Radialrichtung wirken) ausgebildet. Insoweit bildet die Abtriebsglocke 34 gemeinsam mit dem Circularspline 30 ein torsionssteifes und gleichzeitig biegeweiches Abtriebselement 7, das mit einer Einstellwelle 3 drehfest verbunden ist und das die übrigen Teile des Stellantriebs 2 von fremdangetriebenen axialen und/oder radialen Bewegungen der Einstellwelle 3 wenigstens teilweise entkoppelt. Die Einstellwelle 3 trägt ein Zahnrad 14 zur Ankopplung an ein (in dieser Figur nicht dargestelltes) Stellelement 16, 22.

Der Stellantrieb 2 weist außerdem einen motorseitig angeordneten Drehstellungssensor 35 auf, mit dem die jeweils aktuelle Drehstellung der Antriebswelle 33 festgestellt werden kann. Von der der Antriebswelle 33 kann auf die Drehstellung der Einstellwelle 3 geschlossen werden.

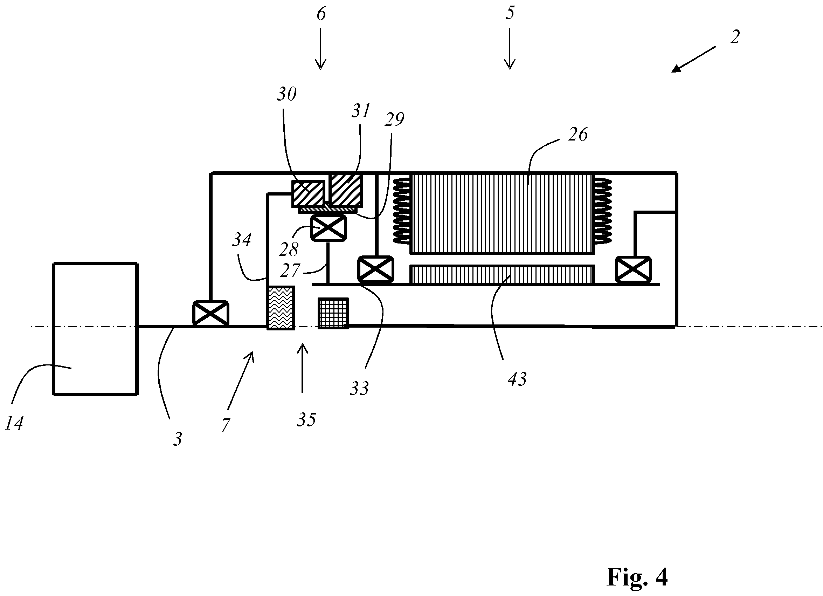

Fig. 4 zeigt ein zweites Ausführungsbeispiel eines Stellantriebes 2 eines erfindungsgemäßen aktiven Radträgers, das sich von dem in Fig. 3 dargestellten Ausführungsbeispiel durch die Einbauposition des Drehstellungssensors 35 unterscheidet. Bei dieser Ausführung ist der Drehstellungssensors 35 getriebeabtriebsseitig angeordnet, so dass unmittelbar die Drehstellung der Einstellwelle 3 gemessen werden kann.

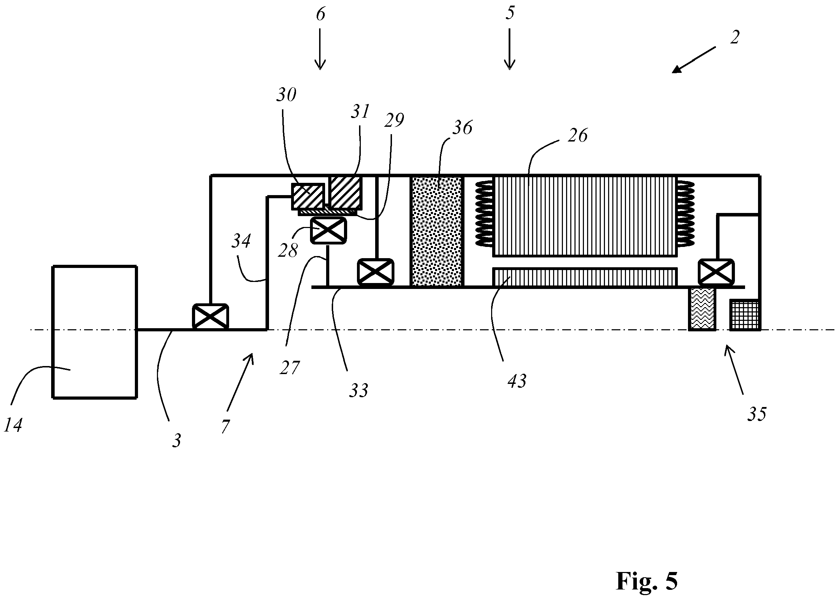

Fig. 5 zeigt ein drittes Ausführungsbeispiel eines Stellantriebes 2 eines erfindungsgemäßen aktiven Radträgers, das sich von dem in Figur 3 dargestellten Ausführungsbeispiel durch eine getriebeeingangsseitig angeordnete Sperreinrichtung 36 zum Blockieren einer Rotationsbewegung der Antriebswelle 33 unterscheidet.

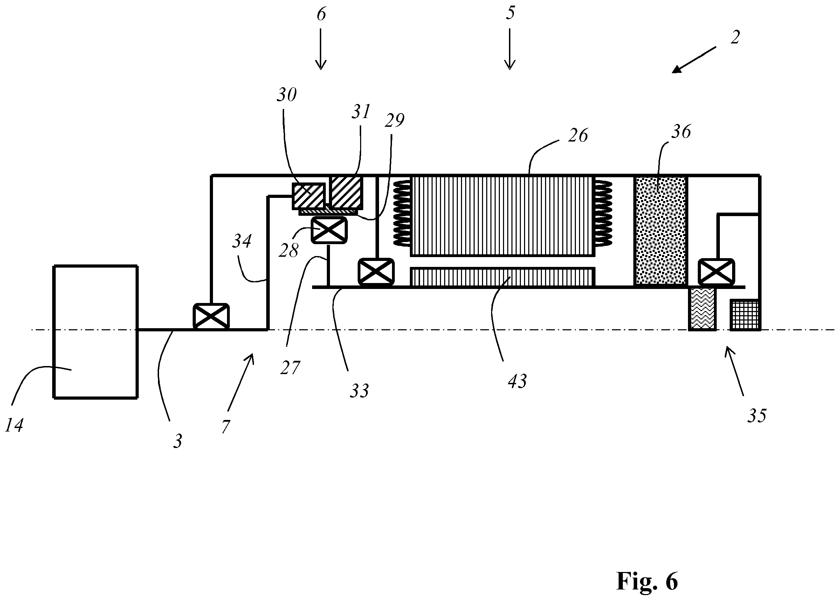

Fig. 6 zeigt ein viertes Ausführungsbeispiel eines Stellantriebes 2 eines erfindungsgemäßen aktiven Radträgers, das sich von dem in Figur 5 dargestellten Ausführungsbeispiel dadurch unterscheidet, dass die Sperreinrichtung 36 zum Blockieren einer Rotationsbewegung der Antriebswelle 33 auf der dem Getriebe 6 abgewandten Seite des Motors 5 angeordnet ist.

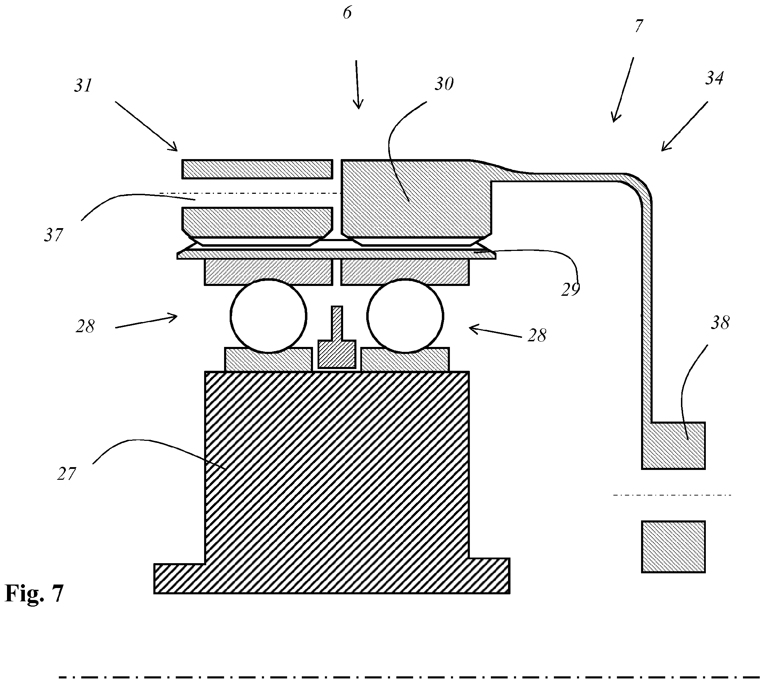

Fig. 7 zeigt ein Ausführungsbeispiel eines als Spannungswellengetriebe ausgeführten Getriebes 6 eines Stellantriebes 2 eines erfindungsgemäßen aktiven Radträgers mit einem Wellengenerator 27 und einem außenverzahnten Flexspline 29. Der Wellengenerator 27 ist mittels zweier Wälzlager 28 drehbar in dem ringförmigen Flexspline 29 gelagert und verformt diesen. Der Flexspline 29 greift mit seiner Außenverzahnung sowohl in die Innenverzahnung eines Dynamicsplines 31, als auch in die Innenverzahnung eines Circularsplines 30, ein. Der Dynamicspline 31 weist eine Bohrung 37 auf, um diesen mittels einer Schraubverbindung in einem Gehäuse 32 drehfest zu befestigen zu können.

Das Spannungswellengetriebe weist ein Abtriebselement 7 auf, das den Circularspline 30 und eine mit diesem drehfest verbundene topfförmige Abtriebsglocke 34, sowie eine Abtriebswelle 38 aufweist. Die Abtriebsglocke 34 ist einstückig gemeinsam mit dem Circularspline 30 und der Abtriebswelle 38, die die Einstellwelle 3 sein kann oder die drehfest mit der Einstellwelle 3 verbunden sein kann, hergestellt. Die Abtriebsglocke 34 ist biegeweich und gleichzeitig torsionssteif ausgebildet.

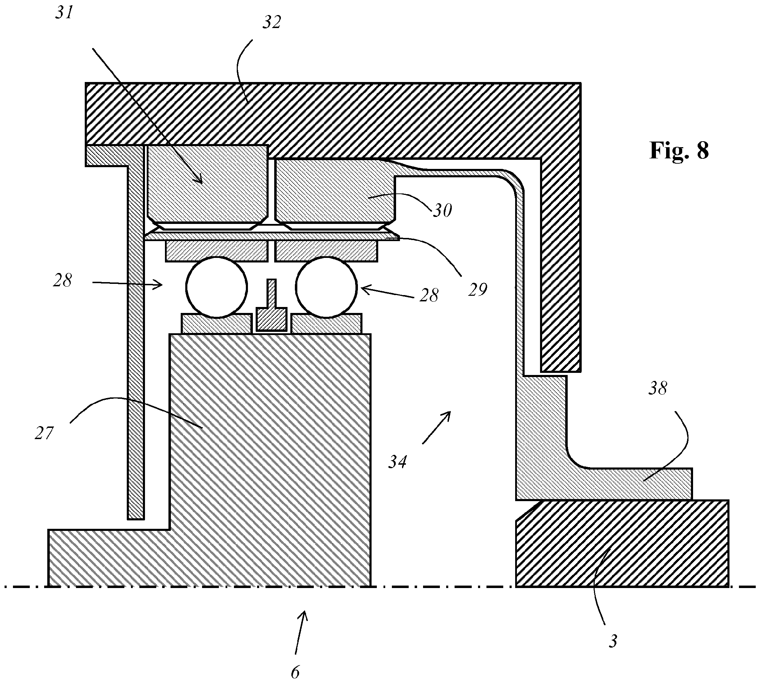

Fig. 8 zeigt ein Ausführungsbeispiel eines anderen als Spannungswellengetriebe ausgeführten Getriebes 6 eines erfindungsgemäßen aktiven Radträgers, das im grundsätzlichen Aufbau dem in Fig. 7 dargestellten Spannungswellengetriebe entspricht und das in einem Gehäuse 32 angeordnet ist. Der Dynamicspline 31 ist drehfest in dem Getriebegehäuse 32 befestigt, während der Circularspline 30 über ein in dieser Figur nicht dargestelltes Gleitlager relativ zu dem Getriebegehäuse 32 drehbar gelagert ist.

Das Spannungswellengetriebe weist ein Abtriebselement 7 auf, das den Circularspline 30 und eine mit diesem drehfest verbundene topfförmige Abtriebsglocke 34, sowie eine Abtriebswelle 38 aufweist. Die Abtriebsglocke 34 ist einstückig gemeinsam mit dem Circularspline 30 und der Abtriebswelle 38 hergestellt. Die Abtriebswelle 38 ist als Hohlwelle ausgebildet und drehfest mit der Einstellwelle 3 verbunden. Die Abtriebsglocke 34 ist biegeweich und gleichzeitig torsionssteif ausgebildet.

Fig. 7 zeigt ein Ausführungsbeispiel eines als Planetengetriebe ausgeführten Getriebes 6 eines Stellantriebes 2 eines erfindungsgemäßen aktiven Radträgers. Das Planetengetriebe weist als Antriebselement ein Sonnenrad 39 auf, das von einem nicht dargestellten Antriebsmotor in Rotation versetzt wird. An einem gehäusefesten Planetenträger 40 sind mehrere Planetenräder 41 angeordnet, die im Zahneingriff mit dem Sonnenrad 39 stehen. Die Planetenräder 41 sind zusammen mit dem Sonnenrad 39 innerhalb eines innenverzahnten Hohlrades 42 angeordnet, mit dem sie in Zahneingriff stehen.

Das Planetengetriebe weist ein einstückig hergestelltes Abtriebselement 35 auf, das das Hohlrad 42 und eine mit diesem drehfest verbundene topfförmige Abtriebsglocke 34, sowie eine Abtriebswelle 38 aufweist. Die Abtriebsglocke 34 ist einstückig gemeinsam mit dem Hohlrad 42 und der Abtriebswelle 38 hergestellt. Die Abtriebsglocke 34 ist biegeweich und gleichzeitig torsionssteif ausgebildet.

### Bezugszeichenliste:

- 1: erste Einstellvorrichtung
- 2: Stellantrieb
- 3: Einstellwelle
- 4: Radscheibe
- 5: Antriebsmotor
- 6: Getriebe
- 7: Abtriebselement
- 8: weitere Einstellvorrichtung
- 9: weiterer Stellantrieb
- 10: weiterer Antriebsmotor
- 11: weiteres Getriebe
- 12: weiteres Abtriebselement
- 13: weitere Einstellwelle
- 14: Zahnrad
- 15: gegen Zahnrad
- 16: achsseitiges Stellelement
- 17: Koppelgetriebe
- 18: einstellen Achse
- 19: Radlager
- 20: weiteres Zahnrad
- 21: weiteres gegen Zahnrad
- 22: radseitiges Stellelement
- 23: weiteres Koppelgetriebe
- 24: weitere Einstellachse
- 25: Kontaktebene
- 26: Stator
- 27: Wellengenerator
- 28: Wälzlager
- 29: Flexspline
- 30: Circularspline
- 31: Dynamicspline
- 32: Gehäuse
- 33: Antriebswelle
- 34: Abtriebsglocke
- 35: Drehstellungssensor
- 36: Sperreinrichtung
- 37: Bohrung
- 38: Abtriebselement
- 39: Sonnenrad
- 40: Planetenträger
- 41: Planetenrad
- 42: Hohlrad
- 43: Rotor

## Patentansprüche

1. Aktiver Radträger beinhaltend eine Einstellvorrichtung (1) mit einer von einem Stellantrieb (2) angetriebenen Einstellwelle (3) zum Einstellen von Spur und/oder Sturz, wobei der Stellantrieb (2) ein torsionssteifes und gleichzeitig biegeweiches Abtriebselement (7) aufweist, über das er an die Einstellwelle (3) angeschlossen ist und das die übrigen Teile des Stellantriebs (2) von fremdangetriebenen axialen und/oder radialen Bewegungen der Einstellwelle (3) wenigstens teilweise entkoppelt, **dadurch gekennzeichnet, dass**
a. der Stellantrieb (2) einen Antriebsmotor (5) und ein dem Antriebsmotor (5) nachgeschaltetes Getriebe (6) aufweist, das als Koaxialgetriebe mit einem auf der Symmetrieachse des Koaxialgetriebes angeordneten Antriebselement und mit einem koaxial angeordneten Umlaufelement ausgebildet ist, wobei
b. das Abtriebselement (7) das Umlaufelement und eine mit dem Umlaufelement drehfest verbundene topfförmige Abtriebsglocke (34) und eine drehfest mit der Abtriebsglocke (34) verbundene Abtriebswelle aufweist, und wobei das Umlaufelement und die Abtriebswelle an einander gegenüberliegenden Enden der Abtriebsglocke angeordnet sind.

2. Aktiver Radträger nach Anspruch 1, **dadurch gekennzeichnet, dass**
a. der Antriebsmotor (5) und das Getriebe (6) in einem gemeinsamen Gehäuse angeordnet sind, und/oder dass
b. das Abtriebselement (5) und die Einstellwelle (3) gemeinsam einstückig hergestellt sind, und/oder dass
c. der Antriebsmotor (5) und das Getriebe (6) zueinander koaxial angeordnet sind oder dass der Antriebsmotor (5) und das Getriebe (6) zueinander achsparallel angeordnet sind.

3. Aktiver Radträger nach Anspruch 1 oder 2, **dadurch gekennzeichnet, dass**
a. das Abtriebselement (7) und/oder die Abtriebsglocke (34), torsionssteif ausgebildet ist, und/oder dass
b. das Abtriebselement (7), insbesondere die Abtriebsglocke (34), in Bezug auf Drehmomente, deren Drehmomentvektor axial ausgerichtet ist, torsionssteif ausgebildet ist, und/oder dass
c. das Abtriebselement (7), insbesondere die Abtriebsglocke (34), in Bezug auf Kräfte, die in Axialrichtung und/oder in Radialrichtung wirken, elastisch ausgebildet ist, und/oder dass
d. das Abtriebselement (7) und/oder die Abtriebsglocke (34), biegeweich ausgebildet sind, und/oder dass
e. das Abtriebselement (7) und/oder die Abtriebsglocke (34) in Axialrichtung und/oder in Radialrichtung elastisch ausgebildet sind, und/oder dass
f. das Abtriebselement (7) und/oder die Abtriebsglocke (34) als einerseits radialflexible und/oder quer zur Axialrichtung biegbare und andererseits torsionssteife Kupplung ausgebildet sind.

4. Aktiver Radträger nach einem der Ansprüche 1 bis 3, **dadurch gekennzeichnet, dass** das Abtriebselement (7) und/oder die Abtriebsglocke (34) wenigstens einen Biegeabschnitt mit einer verringerten Wanddicke aufweist.

5. Aktiver Radträger nach einem der Ansprüche 1 bis 4, **dadurch gekennzeichnet, dass**
a. das Abtriebselement (7) und/oder die Abtriebsglocke (34) einen kreiszylinderförmigen Abschnitt aufweist und/oder dass die Abtriebsglocke (34) einen sich in radialer Richtung erstreckenden Bodenabschnitt aufweist, und/oder dass
b. das Abtriebselement (7) und/oder die Abtriebsglocke (34) einen kreiszylinderförmigen Abschnitt aufweist und/oder dass die Abtriebsglocke (34) einen sich in radialer Richtung erstreckenden Bodenabschnitt aufweist, wobei der Bodenabschnitt, insbesondere in radialer und/oder radialer Richtung, elastisch ausgebildet ist, und/oder dass
c. das Abtriebselement (7) und/oder die Abtriebsglocke (34) einen kreiszylinderförmigen Abschnitt aufweist und/oder dass die Abtriebsglocke (34) einen sich in radialer Richtung erstreckenden Bodenabschnitt aufweist, wobei der Bodenabschnitt und/oder der kreiszylinderförmige Abschnitt gewellt ist, und/oder dass
d. das Abtriebselement (7) und/oder die Abtriebsglocke (34) einen kreiszylinderförmigen Abschnitt aufweist und/oder dass die Abtriebsglocke (34) einen sich in radialer Richtung erstreckenden Bodenabschnitt aufweist, wobei der kreiszylinderförmige Abschnitt und der Bodenabschnitt in einem Bereich mit einer verringerten Wanddicke ineinander übergehen.

6. Aktiver Radträger nach einem der Ansprüche 1 bis 5, **dadurch gekennzeichnet, dass** die Abtriebswelle auf der Symmetrieachse des Koaxialgetriebes angeordnete ist.

7. Aktiver Radträger nach einem der Ansprüche 1 bis 6, **dadurch gekennzeichnet, dass**
a. die Abtriebsglocke (34) einstückig gemeinsam mit dem Umlaufelement hergestellt ist, und/oder dass
b. das Abtriebselement (7) und/oder die Abtriebsglocke (34) einstückig gemeinsam mit der Abtriebswelle hergestellt ist, und/oder dass
c. das Abtriebselement (7) ein Ankoppelelement, insbesondere einen Flansch, zum Ankoppeln der Welle aufweist, und/oder dass
d. das Abtriebselement (7) ein Ankoppelelement, insbesondere einen Flansch, zum Ankoppeln der Welle aufweist, das einen kleineren Durchmesser, als das Hohlrad aufweist.

8. Aktiver Radträger nach einem der Ansprüche 1 bis 7, **dadurch gekennzeichnet, dass**
a. das Umlaufelement mittels einer Umlaufelementlagerung, insbesondere ausschließlich, gleitgelagert ist, und/oder dass
b. das Umlaufelement mittels einer Umlaufelementlagerung relativ zu einem Gehäuse des Stellantriebes (2) oder des Getriebes (6) und/oder relativ zur Symmetrieachse des Getriebes (6) drehbar, jedoch ortsfest, gelagert ist.

9. Aktiver Radträger nach Anspruch 8, **dadurch gekennzeichnet, dass**
a. die Umlaufelementlagerung als Gleitlager oder als Wälzlager ausgebildet ist, und/oder dass
b. die Umlaufelementlagerung das Umlaufelement in radialer und/oder axialer Richtung relativ zu einem Gehäuse des Spannungswellengetriebes abstützt, und/oder dass
c. die Umlaufelementlagerung das Umlaufelement radial umgibt, und/oder dass
d. die Umlaufelementlagerung wenigstens ein das Umlaufelement koaxial an seinem Außenumfang umgebendes Gleitlager oder Wälzlager aufweist und/oder dass
e. die Umlaufelementlagerung mehrere, das Umlaufelement an seinem Außenumfang umgebende Stützstellen aufweist, und/oder dass
f. die Umlaufelementlagerung axial an dem Umlaufelement anliegt.

10. Aktiver Radträger nach einem der Ansprüche 1 bis 9, **dadurch gekennzeichnet, dass**
a. das Koaxialgetriebe ein Spannungswellengetriebe ist, und/oder dass
b. das Koaxialgetriebe ein Spannungswellengetriebe ist und das Umlaufelement ein Circularspline (30) oder ein Dynamicspline (31) ist, und/oder dass
c. das Koaxialgetriebe ein Spannungswellengetriebe und das Umlaufelement ein Flexspline (29) ist, und/oder dass
d. das Koaxialgetriebe ein Spannungswellengetriebe und das Antriebselement ein Wellengenerator (27) ist oder einen Wellengenerator (27) aufweist.

11. Aktiver Radträger nach einem der Ansprüche 1 bis 9, **dadurch gekennzeichnet, dass**
a. das Getriebe (6) ein Planetengetriebe ist und/oder dass
b. das Getriebe (6) ein Planetengetriebe und das Umlaufelement ein Planetenradträger (40) oder ein Hohlrad (42) ist und/oder dass
c. das Getriebe (6) ein Planetengetriebe ist und das Antriebselement ein Sonnenrad (39) ist oder ein Sonnenrad (39) aufweist.

12. Aktiver Radträger nach einem der Ansprüche 1 bis 11, **gekennzeichnet durch** eine Sperreinrichtung (36) und/oder eine Bremse zum Blockieren einer Rotationsbewegung eines Rotationsbauteils des Stellantriebes.

13. Aktiver Radträger nach einem der Ansprüche 1 bis 12, **dadurch gekennzeichnet, dass**
a. der aktive Radträger einen weiteren Stellantrieb (9) aufweist, der die Merkmale des Kennzeichnungsteils des Anspruchs 1 und/oder die zusätzlichen Merkmale eines der Ansprüche 2 bis 12 aufweist, und/oder dass
b. der aktive Radträger ein um eine Einstellachse relativ zu einem achsseitigen Träger drehbares, achsseitiges Stellelement (16) und ein relativ zu dem achsseitigen Stellelement (16) drehbares radseitiges Stellelement (22) aufweist, und/oder dass
c. der aktive Radträger ein um eine Einstellachse relativ zu einem achsseitigen Träger drehbares, achsseitiges Stellelement (16) und ein relativ zu dem achsseitigen Stellelement (16) drehbares radseitiges Stellelement (22) aufweist, wobei die Stellelemente (16, 22) an Kontaktflächen in einer Kontaktebene miteinander in Kontakt stehen, die einen von 90 Grad verschiedenen Winkel zur Einstellachse aufweist, und/oder dass
d. der aktive Radträger ein radseitiges Stellelement (22) und ein achsseitiges Stellelement (16) aufweist, wobei der Stellantrieb (2) dazu dient, das radseitige Stellelement (22) drehend anzutreiben, während ein weiterer Stellantrieb (9) dazu dient, das achsseitige Stellelement (16) drehend anzutreiben, und/oder dass
e. die Einstellwelle (3) über ein Koppelgetriebe (17) mit einem Stellelement des aktiven Radträgers wirkverbunden ist und/oder dass die Einstellwelle (3) über ein weiteres Koppelgetriebe (23) mit einem weiteren Stellelement des aktiven Radträgers wirkverbunden ist.

14. Fahrwerk für ein Kraftfahrzeug, das wenigstens einen aktiven Radträger nach einem der Ansprüche 1 bis 13 aufweist.

15. Fahrzeug, das wenigstens einen aktiven Radträger nach einem der Ansprüche 1 bis 13 aufweist.

## Claims

1. Active wheel support comprising a setting apparatus (1) with a setting shaft (3) which is driven by an actuating drive (2) for setting track and/or camber, the actuating drive (2) having a torsionally rigid and at the same time pliable output element (7), via which it is connected to the setting shaft (3) and which at least partially decouples the remaining parts of the actuating drive (2) from externally driven axial and/or radial movements of the setting shaft (3), **characterized in that**
a. the actuating drive (2) has a drive motor (5) and a gear mechanism (6) which is connected downstream of the drive motor (5) and is configured as a coaxial gear mechanism with a drive element which is arranged on the axis of symmetry of the coaxial gear mechanism and with a circulating element which is arranged coaxially,
b. the output element (7) having the circulating element, a pot-shaped output bell (34) which is connected fixedly to the circulating element so as to rotate with it, and an output shaft which is connected fixedly to the output bell (34) so as to rotate with it, and the circulating element and the output shaft being arranged at opposite ends of the output bell.

2. Active wheel support according to Claim 1, **characterized in that**
a. the drive motor (5) and the gear mechanism (6) are arranged in a common housing, and/or **in that**
b. the output element (5) and the setting shaft (3) are produced jointly in one piece, and/or **in that**
c. the drive motor (5) and the gear mechanism (6) are arranged coaxially with respect to one another, or in that the drive motor (5) and the gear mechanism (6) are arranged in an axially parallel manner with respect to one another.

3. Active wheel support according to Claim 1 or 2, **characterized in that**
a. the output element (7) and/or the output bell (34) are/is of torsionally rigid configuration, and/or in that
b. the output element (7), in particular the output bell (34), is of torsionally rigid configuration in relation to torques, the torque vector of which is oriented axially, and/or **in that**
c. the output element (7), in particular the output bell (34), is of elastic configuration in relation to forces which act in the axial direction and/or in the radial direction, and/or **in that**
d. the output element (7) and/or the output bell (34) are/is of pliable configuration, and/or **in that**
e. the output element (7) and/or the output bell (34) are/is of elastic configuration in the axial direction and/or in the radial direction, and/or in that
f. the output element (7) and/or the output bell (34) are/is configured as a coupling which is firstly radially flexible and/or can be bent transversely with respect to the axial direction and secondly is torsionally rigid.

4. Active wheel support according to one of Claims 1 to 3, **characterized in that** the output element (7) and/or the output bell (34) have/has at least one bending section with a reduced wall thickness.

5. Active wheel support according to one of Claims 1 to 4, **characterized in that**
a. the output element (7) and/or the output bell (34) have/has a circular-cylindrical section, and/or **in that** the output bell (34) has a bottom section which extends in the radial direction, and/or **in that**
b. the output element (7) and/or the output bell (34) have/has a circular-cylindrical section, and/or **in that** the output bell (34) has a bottom section which extends in the radial direction, the bottom section being of elastic configuration, in particular in the radial and/or radial direction, and/or **in that**
c. the output element (7) and/or the output bell (34) have/has a circular-cylindrical section, and/or **in that** the output bell (34) has a bottom section which extends in the radial direction, the bottom section and/or the circular-cylindrical section being corrugated, and/or **in that**
d. the output element (7) and/or the output bell (34) have/has a circular-cylindrical section, and/or **in that** the output bell (34) has a bottom section which extends in the radial direction, the circular-cylindrical section and the bottom section merging into one another in a region with a reduced wall thickness.

6. Active wheel support according to one of Claims 1 to 5, **characterized in that** the output shaft is arranged on the axis of symmetry of the coaxial gear mechanism.

7. Active wheel support according to one of Claims 1 to 6, **characterized in that**
a. the output bell (34) is produced in one piece together with the circulating element, and/or **in that**
b. the output element (7) and/or the output bell (34) are/is produced in one piece together with the output shaft, and/or **in that**
c. the output element (7) has a coupling element, in particular a flange, for coupling the shaft, and/or **in that**
d. the output element (7) has a coupling element, in particular a flange, for coupling the shaft, which coupling element has a smaller diameter than the internal gear.

8. Active wheel support according to one of Claims 1 to 7, **characterized in that**
a. the circulating element is mounted in a sliding manner, in particular exclusively, by means of a circulating element bearing, and/or **in that**
b. the circulating element is mounted by means of a circulating element bearing such that it can be rotated, but is stationary, relative to a housing of the actuating drive (2) or the gear mechanism (6) and/or relative to the axis of symmetry of the gear mechanism (6).

9. Active wheel support according to Claim 8, **characterized in that**
a. the circulating element bearing is configured as a plain bearing or as an anti-friction bearing, and/or **in that**
b. the circulating element bearing supports the circulating element in the radial and/or axial direction relative to a housing of the strain wave gear mechanism, and/or **in that**
c. the circulating element bearing surrounds the circulating element radially, and/or **in that**
d. the circulating element bearing has at least one plain bearing or anti-friction bearing which surrounds the circulating element coaxially on its outer circumference, and/or **in that**
e. the circulating element bearing has a plurality of supporting points which surround the circulating element on its outer circumference, and/or **in that**
f. the circulating element bearing bears axially against the circulating element.

10. Active wheel support according to one of Claims 1 to 9, **characterized in that**
a. the coaxial gear mechanism is a strain wave gear mechanism, and/or **in that**
b. the coaxial gear mechanism is a strain wave gear mechanism and the circulating element is a circular spline (30) or a dynamic spline (31), and/or **in that**
c. the coaxial gear mechanism is a strain wave gear mechanism and the circulating element is a flex spline (29), and/or **in that**
d. the coaxial gear mechanism is a strain wave gear mechanism, and the drive element is a wave generator (27) or has a wave generator (27).

11. Active wheel support according to one of Claims 1 to 9, **characterized in that**
a. the gear mechanism (6) is a planetary gear mechanism, and/or **in that**
b. the gear mechanism (6) is a planetary gear mechanism, and the circulating element is a planetary gear carrier (40) or an internal gear (42), and/or **in that**
c. the gear mechanism (6) is a planetary gear mechanism, and the drive element is a sun gear (39) or has a sun gear (39).

12. Active wheel support according to one of Claims 1 to 11, **characterized by** a locking device (36) and/or a brake for locking a rotational movement of a rotational component of the actuating drive.

13. Active wheel support according to one of Claims 1 to 12, **characterized in that**
a. the active wheel support has a further actuating drive (9) which has the features of the characterizing part of Claim 1 and/or the additional features of one of Claims 2 to 12, and/or **in that**
b. the active wheel support has an axle-side actuating element (16) which can be rotated about a setting axis relative to an axle-side support, and a wheel-side actuating element (22) which can be rotated relative to the axle-side actuating element (16), and/or **in that**
c. the active wheel support has an axle-side actuating element (16) which can be rotated about a setting axis relative to an axle-side support, and a wheel-side actuating element (22) which can be rotated relative to the axle-side actuating element (16), the actuating elements (16, 22) being in contact with one another on contact faces in a contact plane which is at an angle with respect to the setting axis, which angle is different from 90°, and/or **in that**
d. the active wheel support has a wheel-side actuating element (22) and an axle-side actuating element (16), the actuating drive (2) serving to drive the wheel-side actuating element (22) rotationally, whereas a further actuating drive (9) serves to drive the axle-side actuating element (16) rotationally, and/or **in that**
e. the setting shaft (3) is operatively connected via a coupler mechanism (17) to an actuating element of the active wheel support, and/or **in that** the setting shaft (3) is operatively connected via a further coupler mechanism (23) to a further actuating element of the active wheel support.

14. Chassis for a motor vehicle which has at least one active wheel support according to one of Claims 1 to 13.

15. Vehicle which has at least one active wheel support according to one of Claims 1 to 13.

## Revendications

1. Support de roue actif, comprenant un dispositif d'ajustement (1) avec un arbre d'ajustement (3) entraîné par un entraînement de réglage (2), pour ajuster l'angle de pincement et/ou le carrossage, l'entraînement de réglage (2) présentant un élément de prise de force (7) rigide en torsion et simultanément souple en flexion, par le biais duquel il est raccordé à l'arbre d'ajustement (3) et qui désaccouple au moins en partie les autres parties de l'entraînement de réglage (2) vis-à-vis de mouvements axiaux et/ou radiaux de l'arbre d'ajustement (3), entraînés de l'extérieur, **caractérisé en ce que**
a. l'entraînement de réglage (2) présente un moteur d'entraînement (5) et une transmission (6) montée en aval du moteur d'entraînement (5), qui est réalisée sous forme de transmission coaxiale avec un élément d'entraînement disposé sur l'axe de symétrie de la transmission coaxiale et avec un élément périphérique disposé coaxialement,
b. l'élément de prise de force (7) présentant l'élément périphérique et une cloche de prise de force (34) en forme de pot, connectée de manière solidaire en rotation à l'élément périphérique, et un arbre de prise de force connecté de manière solidaire en rotation à la cloche de prise de force (34), et l'élément périphérique et l'arbre de prise de force étant disposés à des extrémités mutuellement opposées de la cloche de prise de force.

2. Support de roue actif selon la revendication 1, **caractérisé en ce que**
a. le moteur d'entraînement (5) et la transmission (6) sont disposés dans un boîtier commun et/ou en ce que
b. l'élément de prise de force (5) et l'arbre d'ajustement (3) sont fabriqués en commun d'une seule pièce, et/ou **en ce que**
c. le moteur d'entraînement (5) et la transmission (6) sont disposés coaxialement l'un par rapport à l'autre ou **en ce que** le moteur d'entraînement (5) et la transmission (6) sont disposés avec leurs axes parallèles l'un à l'autre.

3. Support de roue actif selon la revendication 1 ou 2, **caractérisé en ce que**
a. l'élément de prise de force (7) et/ou la cloche de prise de force (34) sont réalisés de manière rigide en torsion, et/ou **en ce que**
b. l'élément de prise de force (7), en particulier la cloche de prise de force (34), par rapport à des couples dont le vecteur de couple est orienté axialement, est réalisé(e) de manière rigide en torsion, et/ou **en ce que**
c. l'élément de prise de force (7), en particulier la cloche de prise de force (34), par rapport à des forces qui agissent dans la direction axiale et/ou dans la direction radiale, est réalisé(e) sous forme élastique, et/ou **en ce que**
d. l'élément de prise de force (7) et/ou la cloche de prise de force (34) sont réalisés de manière souple en flexion, et/ou **en ce que**
e. l'élément de prise de force (7) et/ou la cloche de prise de force (34) sont réalisés sous forme élastique dans la direction axiale et/ou dans la direction radiale et/ou **en ce que**
f. l'élément de prise de force (7) et/ou la cloche de prise de force (34) sont réalisés sous forme d'accouplement d'une part flexible radialement et/ou flexible transversalement à la direction axiale, et d'autre part rigide en torsion.

4. Support de roue actif selon l'une quelconque des revendications 1 à 3, **caractérisé en ce que** l'élément de prise de force (7) et/ou la cloche de prise de force (34) présentent au moins une portion flexible avec une épaisseur de paroi réduite.

5. Support de roue actif selon l'une quelconque des revendications 1 à 4, **caractérisé en ce que**
a. l'élément de prise de force (7) et/ou la cloche de prise de force (34) présentent une portion de forme cylindrique circulaire et/ou **en ce que** la cloche de prise de force (34) présente une portion de fond s'étendant dans la direction radiale, et/ou **en ce que**
b. l'élément de prise de force (7) et/ou la cloche de prise de force (34) présentent une portion de forme cylindrique circulaire et/ou **en ce que** la cloche de prise de force (34) présente une portion de fond s'étendant dans la direction radiale, la portion de fond, en particulier dans la direction radiale et/ou radiale, étant réalisée sous forme élastique, et/ou **en ce que**
c. l'élément de prise de force (7) et/ou la cloche de prise de force (34) présentent une portion de forme cylindrique circulaire et/ou **en ce que** la cloche de prise de force (34) présente une portion de fond s'étendant dans la direction radiale, la portion de fond et/ou la portion de forme cylindrique circulaire étant ondulées, et/ou **en ce que**
d. l'élément de prise de force (7) et/ou la cloche de prise de force (34) présentent une portion de forme cylindrique circulaire et/ou **en ce que** la cloche de prise de force (34) présente une portion de fond s'étendant dans la direction radiale, la portion de forme cylindrique circulaire et la portion de fond se prolongeant l'une dans l'autre dans une région d'épaisseur de paroi réduite.

6. Support de roue actif selon l'une quelconque des revendications 1 à 5, **caractérisé en ce que** l'arbre de prise de force est disposé sur l'axe de symétrie de la transmission coaxiale.

7. Support de roue actif selon l'une quelconque des revendications 1 à 6, **caractérisé en ce que**
a. la cloche de prise de force (34) est réalisée d'une seule pièce conjointement avec l'élément périphérique, et/ou **en ce que**
b. l'élément de prise de force (7) et/ou la cloche de prise de force (34) sont réalisés d'une seule pièce conjointement avec l'arbre de prise de force, et/ou **en ce que**
c. l'élément de prise de force (7) présente un élément d'accouplement, en particulier une bride, pour l'accouplement de l'arbre, et/ou **en ce que**
d. l'élément de prise de force (7) présente un élément d'accouplement, en particulier une bride, pour l'accouplement de l'arbre, qui présente un plus petit diamètre que la couronne.

8. Support de roue actif selon l'une quelconque des revendications 1 à 7, **caractérisé en ce que**
a. l'élément périphérique est supporté de manière coulissante, notamment exclusivement, au moyen d'un support sur palier d'élément périphérique, et/ou **en ce que**
b. l'élément périphérique est supporté de manière rotative mais fixée en position, au moyen d'un support sur palier d'élément périphérique, par rapport à un boîtier de l'entraînement de réglage (2) ou de la transmission (6) et/ou par rapport à l'axe de symétrie de la transmission (6) .

9. Support de roue actif selon la revendication 8, **caractérisé en ce que**
a. le support sur palier d'élément périphérique est réalisé sous forme de palier lisse ou sous forme de palier à roulement, et/ou **en ce que**
b. le support sur palier d'élément périphérique supporte l'élément périphérique dans la direction radiale et/ou axiale par rapport à un boîtier de la transmission harmonique, et/ou **en ce que**
c. le support sur palier d'élément périphérique entoure radialement l'élément périphérique, et/ou **en ce que**
d. le support sur palier d'élément périphérique présente au moins un palier lisse ou un palier à roulement entourant l'élément périphérique coaxialement au niveau de sa périphérie extérieure et/ou **en ce que**
e. le support sur palier d'élément périphérique présente plusieurs points d'appui entourant l'élément périphérique au niveau de sa périphérie extérieure, et/ou **en ce que**
f. le support sur palier d'élément périphérique s'applique axialement contre l'élément périphérique.

10. Support de roue actif selon l'une quelconque des revendications 1 à 9, **caractérisé en ce que**
a. la transmission coaxiale est une transmission harmonique, et/ou **en ce que**
b. la transmission coaxiale est une transmission harmonique et l'élément périphérique est un profilé cannelé circulaire (Circularspline) (30) ou un profilé cannelé dynamique (Dynamicspline) (31), et/ou **en ce que**
c. la transmission coaxiale est une transmission harmonique et l'élément périphérique est un profilé cannelé flexible (Flexspline) (29), et/ou **en ce que**
d. la transmission coaxiale est une transmission harmonique et l'élément d'entraînement est un générateur d'ondes (27) ou présente un générateur d'ondes (27).

11. Support de roue actif selon l'une quelconque des revendications 1 à 9, **caractérisé en ce que**
a. la transmission (6) est une transmission planétaire et/ou **en ce que**
b. la transmission (6) est une transmission planétaire et l'élément périphérique est un porte-satellites (40) ou une couronne (42) et/ou **en ce que**
c. la transmission (6) est une transmission planétaire et l'élément d'entraînement est une roue solaire (39) ou présente une roue solaire (39) .

12. Support de roue actif selon l'une quelconque des revendications 1 à 11, **caractérisé par** un dispositif de blocage (36) et/ou un frein pour bloquer un mouvement de rotation d'un composant rotatif de l'entraînement de réglage.

13. Support de roue actif selon l'une quelconque des revendications 1 à 12, **caractérisé en ce que**
a. le support de roue actif présente un entraînement de réglage supplémentaire (9), qui présente les caractéristiques de la partie caractérisante de la revendication 1 et/ou les caractéristiques supplémentaires de l'une des revendications 2 à 12, et/ou **en ce que**
b. le support de roue actif présente un élément de réglage du côté de l'axe (16), pouvant tourner autour d'un axe d'ajustement par rapport à un support du côté de l'axe, et un élément de réglage du côté de la roue (22), pouvant tourner par rapport à l'élément de réglage du côté de l'axe (16), et/ou **en ce que**
c. le support de roue actif présente un élément de réglage du côté de l'axe (16), pouvant tourner autour d'un axe d'ajustement par rapport à un support du côté de l'axe et un élément de réglage du côté de la roue (22), pouvant tourner par rapport à l'élément de réglage du côté de l'axe (16), les éléments de réglage (16, 22) étant en contact l'un avec l'autre au niveau de surfaces de contact dans un plan de contact qui présente un angle différent de 90° par rapport à l'axe d'ajustement, et/ou **en ce que**
d. le support de roue actif présente un élément de réglage du côté de la roue (22) et un élément de réglage du côté de l'axe (16), l'entraînement de réglage (2) servant à entraîner en rotation l'élément de réglage du côté de la roue (22), tandis qu'un entraînement de réglage supplémentaire (9) sert à entraîner en rotation l'élément de réglage du côté de l'axe (16), et/ou **en ce que**
e. l'arbre d'ajustement (3) est en liaison fonctionnelle par le biais d'une transmission de couplage (17) avec un élément de réglage du support de roue actif et/ou **en ce que** l'arbre d'ajustement (3) est en liaison fonctionnelle par le biais d'une transmission de couplage supplémentaire (23) avec un élément de réglage supplémentaire du support de roue actif.

14. Châssis pour un véhicule automobile, qui présente au moins un support de roue actif selon l'une quelconque des revendications 1 à 13.

15. Véhicule, présentant au moins un support de roue actif selon l'une quelconque des revendications 1 à 13.
